(19) Europäisches Patentamt

European Patent Office

Office européen des brevets

(11) Veröffentlichungsnummer: **0 386 334 B1**

(12) **EUROPÄISCHE PATENTSCHRIFT**

(45) Veröffentlichungstag der Patentschrift: **29.09.93**

(21) Anmeldenummer: **89122821.5**

(22) Anmeldetag: **11.12.89**

(51) Int. Cl.⁵: **G01D 5/16**, G01B 7/30, G01B 7/00, H01C 10/14

(54) **Vorrichtung zur Positionserfassung.**

(30) Priorität: **07.01.89 DE 3900270**

(43) Veröffentlichungstag der Anmeldung:
**12.09.90 Patentblatt 90/37**

(45) Bekanntmachung des Hinweises auf die
Patenterteilung:
**29.09.93 Patentblatt 93/39**

(84) Benannte Vertragsstaaten:
**CH FR GB LI**

(56) Entgegenhaltungen:
WO-A-86/03258    DE-A- 3 204 807
DE-A- 3 246 959    DE-A- 3 328 810
US-A- 3 360 757    US-A- 4 616 164

(73) Patentinhaber: **Heidelberger Druckmaschinen Aktiengesellschaft**
**Kurfürsten-Anlage 52-60 Postfach 10 29 40**
**D-69019 Heidelberg(DE)**

(72) Erfinder: **Jurkewitz, Manfred**
**Meisenweg 4**
**D-6908 Wiesloch(DE)**

(74) Vertreter: **Stoltenberg, Baldo Heinz-Herbert et al**
**c/o Heidelberger Druckmaschinen AG**
**Kurfürsten-Anlage 52-60**
**D-69115 Heidelberg (DE)**

## Beschreibung

Die Erfindung betrifft eine Vorrichtung zur Erfassung der Position eines Stellantriebes.

In verschiedenen Bereichen der Technik sind sehr häufig Positionsaufgaben zu erfüllen. Beispielsweise kann ein hierzu verwendeter Verstellantrieb einen Elektromotor umfassen, der eine Spindel antreibt, die ein Stellglied linear bewegt. Bei Offset-Druckmaschinen tritt zum Beispiel das Problem auf, die einzelnen Farbzonen entsprechend dem jeweiligen Farbbedarf einzustellen. Hierzu werden die Farbzonenöffnungen jeweils in ihrer Größe mit einem Verstellantrieb vom Leitpult der Druckmaschine aus eingestellt. Die Position des jeweiligen Stellgliedes wird dabei von einem mit diesem gekuppelten Potentiometer erfaßt, wobei die Schleiferstellung des Potentiometers und damit der vorliegende Widerstandswert ein Maß für die Stellglied-Position darstellt. Um eine möglichst hohe Auflösung zu behalten, werden Zehn-Gang-Potentiometer verwendet.

In der DE-A-33 28 810 wird eine Stell- und Anzeigeeinrichtung für die Farbzonenfernverstellung an Druckmaschinen beschrieben. Mit den Farbzonenschrauben einer Farbdosiereinrichtung sind Schrittmotoren verbunden, die ihrerseits mit Potentiometern gekoppelt sind. Die Potentiometerwerte werden mittels eines Fernbediensteuerpultes angezeigt. Über eine Schaltung wird automatisch ein manuell am Fernbediensteuerpult eingestellter Potentiometerwert auf einen Potentiometer der entsprechenden Farbzonenschraube am Druckwerk übertragen.

Die bisherigen Lösungen haben sich in der Praxis bewährt; jedoch wäre eine noch höhere Genauigkeit bei den Positionieraufgaben wünschenswert. Überdies tritt der Nachteil auf, daß die bisher eingesetzten Potentiometer beim überfahren ihrer Endposition mechanisch zerstört werden. Es ist daher stets erforderlich, einen Sicherheitsabstand zu den Endstellungen einzuhalten. Somit kann die Widerstandsanordnung nicht gänzlich ausgenutzt werden.

Aus der DE-A-32 46 959 ist eine Meßvorrichtung zur absoluten Messung einer Position eines Meßobjektes bekannt geworden. Bei den Detektoren handelt es sich um Winkelgeber, die mit unterschiedlichen übersetzungsverhältnissen angetrieben werden. Die einzelnen Detektoren erzeugen so bei Positionsänderungen des Meßobjektes unterschiedliche Positionsmeßsignale. Da die Differenz der Momentanpositionsmeßsignale der Detektoren proportional zur Positionsänderung des Meßobjektes ist, kann eindeutig aus der Differenz der Positionsmeßsignale die Position des Meßobjektes ermittelt werden.

Der Erfindung liegt daher die Aufgabe zugrunde, eine Vorrichtung zu schaffen, die eine höhere Genauigkeit bei der Positionserfassung ermöglicht und überdies keiner mechanischen Begrenzung unterliegt.

Diese Aufgabe wird erfindungsgemäß durch die Merkmale des Hauptanspruches gelöst.

Aufgrund des Einsatzes von Endlos-Potentiometern kann es zu einer mechanischen Begrenzung nicht kommen. Vielmehr lassen sich die Schleifer derartiger Potentiometer um 360° drehen, so daß sie - nach einem vollen Umlauf - wieder ihre Ausgangsposition erreichen. Die Anordnung ist nun so getroffen, daß mit dem Stellglied auch die Schleifer der Potentiometer bewegt werden, wobei aufgrund unterschiedlicher übersetzungsverhältnisse jedoch eine Asynchronität zwischen den beiden Schleiferbewegungen besteht. Mithin nehmen die Widerstandswerte der beiden Potentiometer - je nach Stellgliedposition - unterschiedliche Größen an, so daß die Differenz dieser Größen als Maß für die Position auswertbar ist. über die Wahl der Übersetzungsverhältnisse läßt sich die gewünschte Auflösung und Genauigkeit festlegen. über den gesamten Stellbereich ist stets angestrebt, daß die Anzahl der Umdrehungen des Schleifers des einen Potentiometers gegenüber der Umdrehungszahl des anderen Potentiometers um eine Umdrehung zurückbleibt. Entsprechend ist das übersetzungsverhältnis zwischen den Potentiometern zu wählen.

Vorzugsweise sind die Potentiometer als Eingang-Potentiometer ausgebildet, d. h., daß der Schleifer nach einem Umlauf wieder seine Ausgangsposition erreicht.

Gemäß einer vorteilhaften Weiterbildung der erfindungsgemäßen Vorrichtung ist vorgesehen, daß das übersetzungsverhältnis zwischen den beiden Potentiometern lautet:

$$\ddot{u} = \frac{n1}{n2}$$

für n1 = x gilt: n2 = n1 - 1
wobei gilt:

n1 = Umdrehung des Schleifers des Potentiometers 1

n2 = Umdrehung des Schleifers des Potentiometers 2

x = maximale Gesamtumdrehungszahl des Verstellantriebes für den maximalen Verstellhub

Die obige Formel soll anhand zweier Beispiele näher erläutert werden:

x = 10

Damit ergibt sich ein übersetzungsverhältnis von

2

$$\ddot{u} = \frac{n1}{n2} = \frac{x}{x-1} = \frac{10}{9} = 1{,}\overline{1}$$

dieses bedeutet, daß der maximale Verstellhub 10 Umdrehungen des einen, ersten Potentiometers entspricht, wobei das andere, zweite Potentiometer über diesen Hub nur 9 Umdrehungen erfährt, so daß über den gesamten Verstellbereich eine Umdrehung als Differenz vorliegt.

$x = 100$

Hieraus ergibt sich übersetzungsverhältnis von

$$\ddot{u} = \frac{100}{99} = 1{,}\overline{01}$$

so daß bei 100 Umdrehungen des Schleifers des ersten Potentiometers der Schleifer des zweiten Potentiometers nur 99 Umdrehungen vornimmt, wobei die 100 Umdrehungen dem maximalen Verstellhub des Verstellantriebes entsprechen.

Mithin läuft der Schleifer des zweiten Potentiometers dem Schleifer des ersten Potentiometers nach und zwar derart, daß das Nachlaufmaß gerade eine volle Umdrehung relativ zum Gesamtverstellbereich ausmacht.

Vorzugsweise ist vorgesehen, daß das Antriebsverhältnis der beiden Potentiometer derart gewählt ist, daß - außer am Anfang und am Ende des Gesamterfassungsbereichs - die beiden Schleifer nicht gleichzeitig auf dem jeweiligen Anschlußbereich der Widerstandsanordnung des zugehörigen Potentiometers stehen. Hierdurch ist sichergestellt, daß sich stets eindeutig zu dem jeweils ermittelten Widerstands-Differenzwert die zugehörige Position des Verstellantriebes bzw. des Stellgliedes ermitteln laßt.

Für eine einfache sowie automatische Positionsauswertung ist vorgesehen, daß die Potentiometerwerte über Analog-Digital-Wandler einem die Position auswertenden Rechner zugeführt werden. Die dem Rechner dann zur Verfügung stehenden Digitalwerte werden über gespeicherte Tabellen oder Funktionen im Hinblick auf die Position des Verstellantriebes ausgewertet.

Erfindungsgemäß wird so vorgegangen, daß die Widerstandsanordnungen der Potentiometer an eine Konstantspannung angeschlossen sind, und daß die Differenz der von den Schleifern abgegriffenen Spannungswerte das Maß für die Position darstellt. Mithin werden zur Auswertung nicht die Widerstandswerte an sich, sondern die von den Schleifern abgegriffenenen Spannungswerte verarbeitet.

Die Position läßt sich ermitteln aus:

Position (Grad) = [u1(Volt) - u2 (Volt)] * Steigung (Grad : Volt) + Konstante (Grad)

wobei:

u1 die Spannung des ersten Potentiometers,

u2 die Spannung des zweiten Potentiometers,

die Steigung ein Wert ist, der davon abhängt, ob u1 kleiner oder größer u2 ist und u1 bzw. u2 gleich 0 oder $u_{max}$ oder ungleich 0 ist und

die Konstante ein Wert ist, der ebenfalls davon abhängt, ob u1 kleiner oder größer u2 ist und u1 bzw. u2 gleich 0 oder $u_{max}$ oder ungleich 0 ist.

Die Spannung $u_{max}$ bezeichnet die maximale an den jeweiligen Potentiometern abnehmbare Spannung.

Die Zeichnungen veranschaulichen die Erfindung anhand eines Ausführungsbeispiels und zwar zeigt:

Fig. 1      eine schematische Ansicht der erfindungsgemäßen Vorrichtung,

Fig. 2      ein Schaltbild der Vorrichtung,

Fig. 3      ein Blockschaltbild des Gesamtaufbaues mit AD-Wandler, Rechner, Leistungsteil und Motor,

Fig. 4      ein Drehwinkel-Spannungsdiagramm eines verwendeten Endlos-Potentiometers,

Fig. 5      ein Blockdiagramm der vorzugsweise mittels eines Rechners erfolgenden Auswertung der Potentiometerwerte,

Fig. 6      ein Drehwinkel-Spannungsdiagramm der Vorrichtung bei einer Gesamtumdrehungszahl des Verstellantriebes von x = 10 und

Fig. 7      ein Detailausschnitt aus dem Diagramm gemäß Fig. 6.

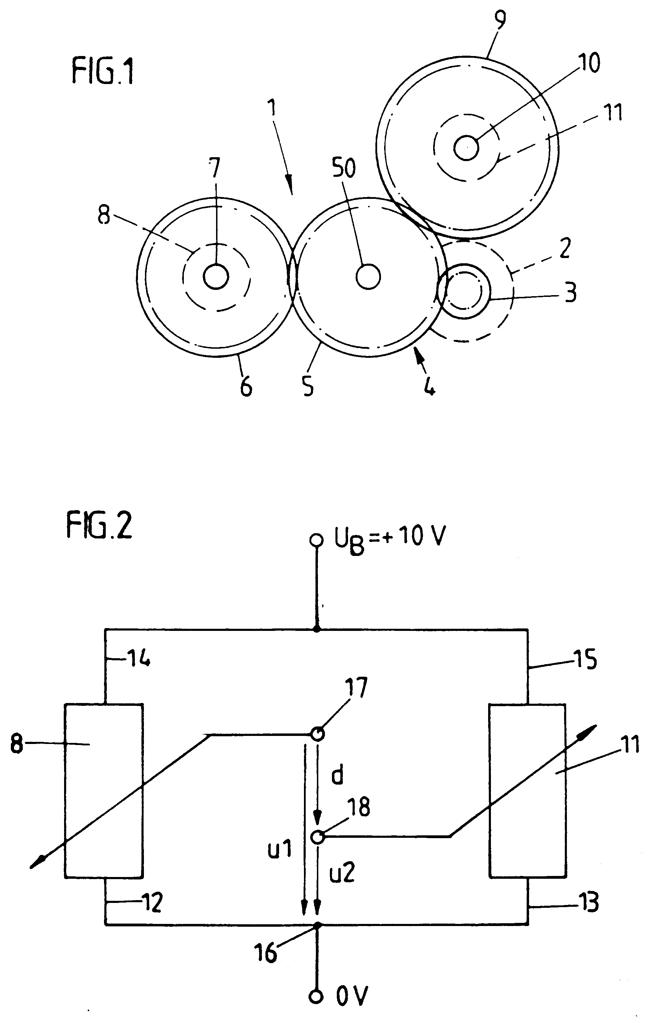

Die Fig. 1 zeigt schematisch einen Verstellantrieb 1 zur Positionierung eines nicht dargestellten Stellgliedes. Der Verstellantrieb 1 weist einen Motor 2 auf, dessen Abtriebswelle mit einem Zahnrad 3 verbunden ist. Das Zahnrad 3 ist Bestandteil eines Stirnradgetriebes 4 und kämmt mit einem zu letzterem gehörenden Zahnrad 5, welches mit einer Gewindespindel 50 verbunden ist. Die Gewindespindel 50 greift in eine nicht dargestellte Gewindebohrung des Stellgliedes ein; d. h., eine Verdrehung des Zahnrades 5 und somit der Gewindespindel 50 führt zu einer Linearverlagerung des Stellgliedes, wobei der gesamte Verstellbereich (linearer Verstellhub) z. B. 120 mm beträgt. Das Zahnrad 5 kämmt mit einem Zahnrad 6, welches über eine Welle 7 mit dem Schleifer eines ersten Potentiometers 8 verbunden ist. überdies steht ein weiteres Zahnrad 9 mit dem Zahnrad 5 kämmend in Eingriff und treibt über eine Welle 10 den Schleifer eines zweiten Potentiometers 11 an. Die Anordnung ist nun so getroffen, daß das Zahnrad 3 10 Zähne, das Zahnrad 5 40 Zähne, das Zahnrad 6 ebenfalls 40 Zähne und das Zahnrad 9 44 Zähne aufweist. Dieses bedeutet, daß sich das Zahnrad 5 um 360° dreht, wenn der Motor 2 vier Umdrehungen vorgenommen hat. Eine Umdrehung des Zahnrades 5 entspricht ebenfalls einer Umdrehung des Zahnrades 6, da beide Zahnräder 5, 6 die gleiche Anzahl von Zähnen aufweisen. Eine Umdrehung des Zahnrades 5 entspricht lediglich einer Teilumdrehung des Zahnrades 9, da letzteres gegenüber dem ersteren untersetzt mitgenommen wird.

Das übersetzungsverhältnis ü der Umdrehungen n1 des Schleifers des ersten Potentiometers 8 zu den Umdrehungen n2 des Schleifers des Potentiometers 11 entspricht demgemäß

$$ü = \frac{n1}{n2}$$

Die Anordnung ist so getroffen, daß für den Fall n1 = x gilt:

$$n2 = n1 - 1,$$

wobei x die maximale Gesamtumdrehungszahl des Verstellantriebes für den maximalen Verstellhub ist. Im vorgestellten Beispiel beträgt der maximale Verstellhub 120 mm, der mit zehn Umdrehungen des Zahnrades 5 durchlaufen werden soll. Das bedeutet, daß eine Umdrehung der Spindel 50 zu einer Verlagerung des Stellgliedes um 12 mm führt. Beim Durchlaufen des gesamten Verstellhubes wird demgemäß auch der Schleifer des Potentiometers 8 zehn Umdrehungen durchführen, während für die Umdrehungszahl des Schleifers des Potentiometers 11 gilt:

$$n2 = \frac{n1}{ü}$$

wobei

$$ü = \frac{z2}{z1}$$

ist.

z1 = Anzahl der Zähne des Zahnrades 5 bzw. des Zahnrades 6
z2 = Anzahl der Zähne des Zahnrades 9.

Damit ergibt sich

$$ü = \frac{44}{40} = 1,1$$

und

$$n2 = \frac{n1}{1,1} = 9,09$$

Aus vorstehenden Darlegungen ist ersichtlich, daß der Schleifer des Potentiometers 11 über den Gesamtverstellhub um etwa eine Umdrehung gegenüber den Gesamtumdrehungen des Schleifers des Potentiometers 8 zurückbleibt. Dabei ist die Anordnung derart justiert, daß zu Beginn des Gesamtverstellhubes die beiden Schleifer der Potentiometer 8, 11 die gleiche Lage, nämlich ihre Nullstellung einnehmen, d. h., der Widerstandswert zwischen Schleifer und dem zugehörigen Anschluß der Widerstandsanordnung beträgt 0 Ohm.

Die Fig. 2 zeigt den elektrischen Anschluß der Potentiometer 8, 11. Die Anfangsanschlüsse 12, 13 der Potentiometer 8, 11 liegen auf 0 Volt und die Endanschlüsse 14, 15 der Potentiometer 8, 11 auf $u_{max}$ = plus 10 Volt einer Konstantspannungsquelle Ub. Der Anfangsanschluß 12 ist mit dem Anfangsanschluß 13 und der 0 Volt-Klemme der Konstantspannungsquelle Ub in einem Punkt 16 zusammengeführt. Zwischen dem Anschluß 17 des Schleifers des Potentiometers 8 und dem Punkt 16 liegt die Spannung U1 und zwischen dem Anschluß 18 des Schleifers des Potentiometers 11 und dem Punkt 16 bildet sich die Spannung U2 aus. Der Differenzwert d entspricht der Differenzspannung zwischen den Anschlüssen 17 und 18 und bemißt sich demgemäß zu

$$d = U1 - U2$$

Hieraus wird deutlich, daß beim Durchlaufen des maximalen Verstellhubes der Anordnung gemäß Fig. 1 die Stellungen der Schleifer der Potentiometer 8, 11 aufgrund der unterschiedlichen übersetzungsverhältnisse zum Stellglied stetig auseinanderlaufen, wodurch sich ein entsprechender Differenzwert d zwischen den Anschlüssen 17, 18 ausbilden wird.

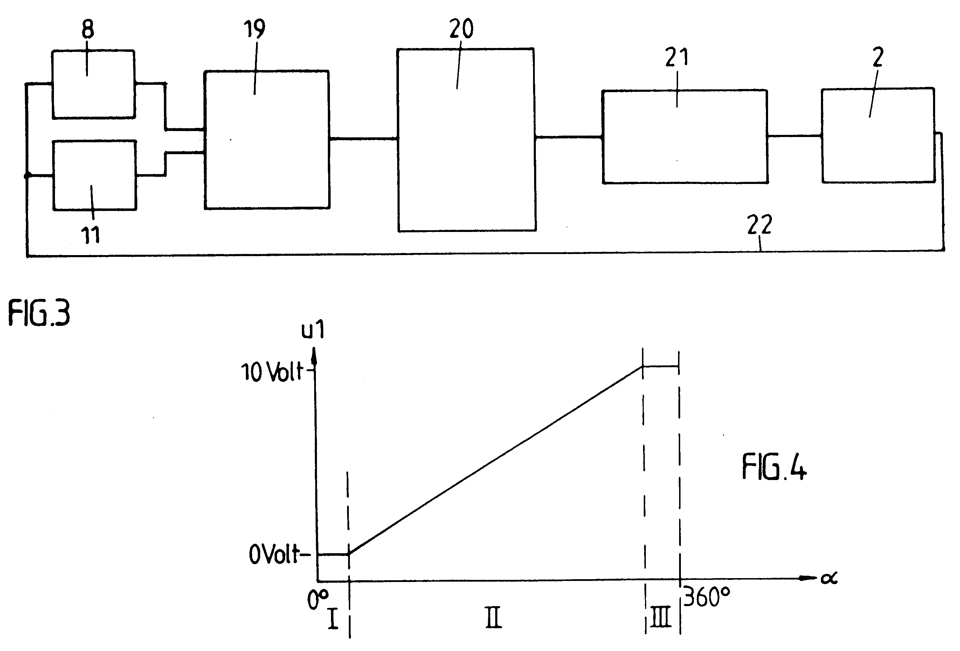

Die Fig. 3 zeigt den Gesamtaufbau der erfindungsgemäßen Vorrichtung. Es ist ersichtlich, daß die den Widerstandswerten der Potentiometer 8, 11 entsprechenden Spannungen U1, U2 einem Analog-Digital-Wandler 19 zugeführt werden, dessen digitaler Ausgang mit einem Rechner 20 in Verbindung steht. Der Rechner 20 ist an ein Leistungsteil 21 angeschlossen, das den Motor 2 versorgt. Der Motor 2 steht mechanisch - wie in Fig. 1 beschrieben - mit den Potentiometern 8, 9 in Verbindung. Dieses ist in Fig. 3 durch die Wirkverbindung 22 angedeutet.

Die den Stellungen der Potentiometer 8, 9 entsprechenden Spannung U1, U2 werden über den AD-Wandler 19 dem Rechner 20 zugeführt, der hieraus, - wie im nachfolgenden noch näher beschrieben - die Position des Verstellantriebes und damit die Stellung des Stellgliedes ermittelt. Ist diese Ist-Stellung gegenüber einem Sollwert unterschiedlich, so wird das Leistungsteil 21 aktiviert, welches den Motor 2 derart ansteuert, daß - entsprechend einem geschlossenen Regelkreis - das Stellglied in eine Ist-Position gefahren wird, die der Soll-Position entspricht. Durch diese Verlagerung werden ebenfalls die Potentiometer 8, 9 bewegt, so daß der Rechner 20 über einen Soll-Istwert-Vergleich erkennt, daß nunmehr keine Abweichung mehr vorliegt; dementsprechend stellt das Leistungsteil 21 die Ansteuerung des Motors 2 ein.

Die Fig. 4 zeigt ein Drehwinkel-Spannungsdiagramm des Potentiometers 8. Ein entsprechendes Diagramm weist das Potentiometer 11 auf. Auf der Ordinate ist die Spannung U1 und auf der Abszisse der Drehwinkel Alpha des Schleifers aufgetragen. Es ist erkennbar, daß im Bereich I trotz Vorliegens eines Drehwinkels Alpha keine Spannungsänderung erfolgt. Die Spannung U1 beträgt hier 0 Volt. Im Bereich II steigt mit wachsendem Drehwinkel Alpha die Spannung linear von 0 Volt auf 10 Volt (Maximalwert der Konstantspannungsquelle Ub) an. Der Bereich II erstreckt sich bis zu einem Drehwinkel Alpha, der kleiner als 360° ist. Hieran schließt sich der Bereich III an, der bis Alpha = 360°, d. h., bis zum Abschluß einer vollen Umdrehung des Schleifers des Potentiometers 8 verläuft. Im Bereich III bleibt die Spannung U1 konstant auf 10 Volt. Das Diagramm gemäß der Fig. 4 verdeutlicht, daß sich der Schleifer des Potentiometers 8 im Bereich I noch nicht auf der Widerstandsanordnung, sondern vielmehr im Anschlußbereich befindet. Erst im Bereich II ist die Widerstandsanordnung erreicht und im Bereich III befindet sich der Schleifer im anderendigen Anschlußbereich. Da die beiden Anschlußbereiche am Anfang und am Ende der Widerstandsanordnung elektrisch voneinander getrennt sein müssen, wäre sogar noch ein spannungsfreier Bereich vorzusehen, der dem 0 Volt-Potential gleichgesetzt werden kann. Dieser ist jedoch hier nicht im einzelnen wiedergegeben.

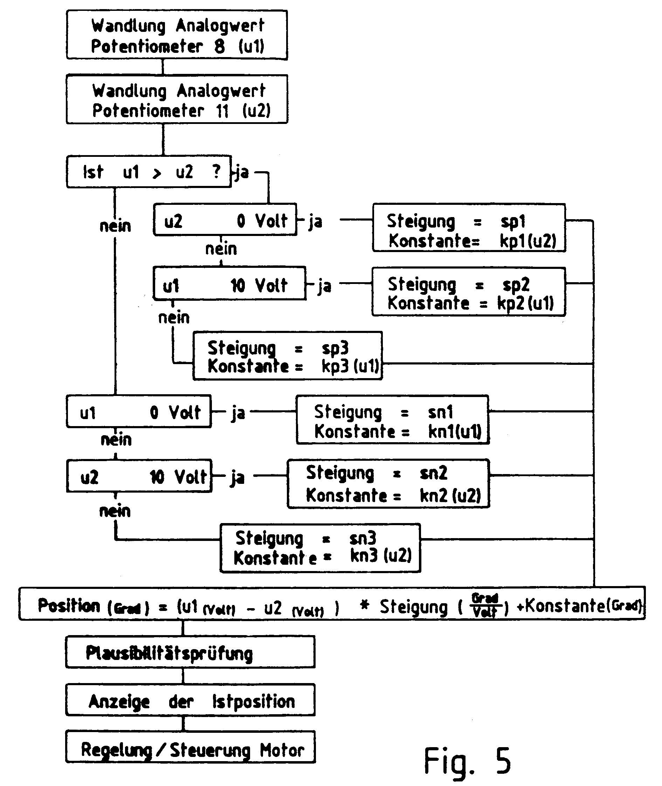

Die Fig. 5, 6 und 7 verdeutlichen die Auswertung der Ausgangsspannungen der Potentiometer 8 und 11 sowie die einzelnen Spannungsverläufe in Bezug auf die jeweiligen Schleiferstellungen:
Es bei unterstellt, daß der Schleifer des Potentiometers 8 den Drehwinkel Alpha und der Schleifer des Potentiometers 11 den Drehwinkel Beta durchlaufe. Ferner sind die beiden Potentiometer 8 und 11 derart justiert, daß für Alpha = Beta = 0° U1 = U2 = 0 Volt vorliegt, das heißt, beide Potemtiometer befinden sich in einer Lage, die der 0°-Stellung in Fig. 4 entspricht.

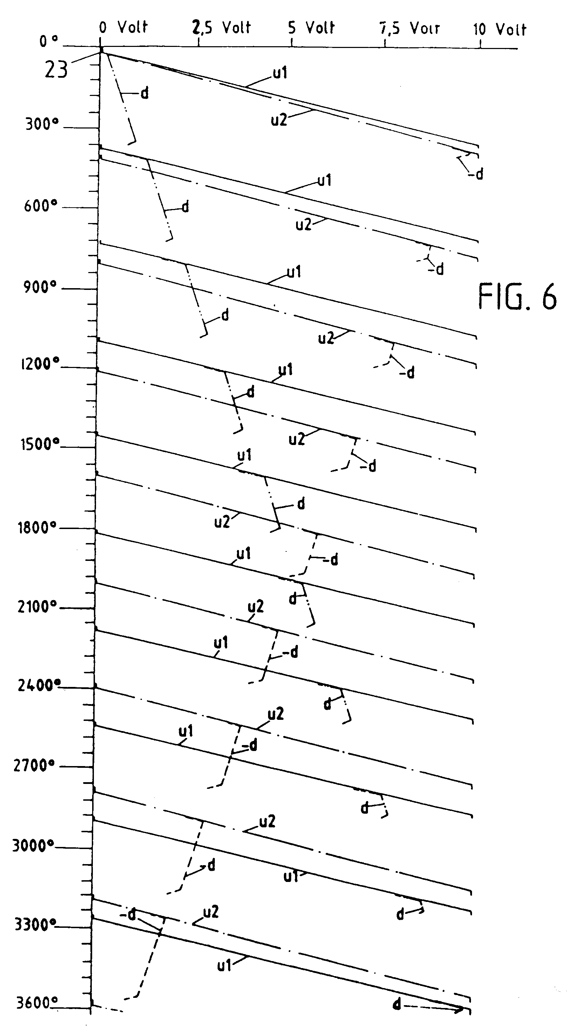

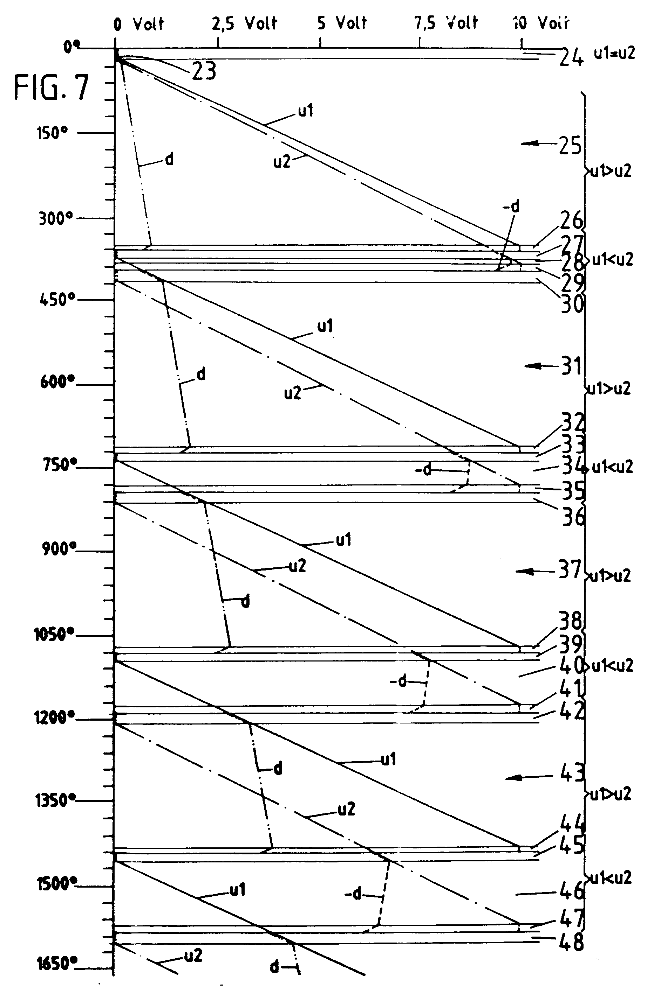

Wird nun der Motor 2 angetrieben und damit das Stirnrandgetriebe 4 in Bewegung gesetzt, so behalten zunächst die Spannungen U1 und U2 ihren Wert 0 Volt über einen bestimmten Drehwinkel Alpha bzw. Beta bei, bis sie schließlich im Punkt 23 der Fig. 7 von 0 Volt an linear ansteigen. Im Zuge ihres Verlaufes bildet sich zwischen den Spannungen U1 und U2 aufgrund der unterschiedlichen Übersetzungsverhältnisse zum Zahnrad 5 eine Differenzspannung aus, die mit dem Differenzwert d gekennzeichnet ist. Vor Erreichen des Drehwinkels Alpha 360° nimmt die Spannung U1 ihren Maximalwert 10 Volt an, der dem Betrag der Konstantspannungsquelle Ub entspricht. Während nun im Zuge des weiteren Verlaufes die Spannung U1 von plus 10 Volt auf 0 Volt springt (vgl. das Diagramm der Fig. 4), behält die Spannung U2 noch für einen gewissen Drehwinkel Beta ihre linear ansteigende Tendenz bei. Dieses bedeutet, daß in einem bestimmten Bereich die Differenz U1 - U2 negativ ist. Dieser negative Bereich des Differenzwertes d ist der Einfachheit halber ebenfalls auf der positiven Voltskala der Fig. 6 und 7 als gestrichelte Linie -d dargestellt. Erst wenn im weiteren Drehwinkelverlauf die Spannung U2 von ihrem Maximalwert plus 10 Volt auf 0 Volt zurückspringt, wird der Differenzwert d wieder positiv. Dieses bleibt solange der Fall, bis - in entsprechender Weise - wiederum eine Vorzeichenumkehr von d erfolgt usw.

Die Spannungsverläufe sollen im Detail anhand der Fig. 7 näher erläutert werden, wobei die Fig. 7 einen Ausschnitt der Fig. 6 in vergrößertem Maßstab (Dehnung der Drehwinkelachse) wiedergibt. Zuvor sei jedoch nochmals auf die Fig. 6 verwiesen, aus der insgesamt ersichtlich ist, daß der Differenzwert d = U1 - U2 im Zuge des Verlaufes von zehn Umdrehungen des Zahnrades 5 und damit der Gewindespindel 50 von 0 bis auf fast 10 Volt ansteigt, wobei aufgrund der durch die Anschlüsse bedingten Übergänge der Potentiometer 8 und 11 insgesamt zehn Teilabschnitte ausgebildet sind.

Die Fig. 7 zeigt - ausgehend von einem Drehwinkel Alpha bzw. Beta von 0 Grad - einen Bereich 24, in dem die Spannungen U1 und U2 gleich 0 Volt sind. Hieran schließt sich ein Bereich 25 an, in dem U1 und U2 stetig ansteigen und der bis zu dem Punkt reicht, an dem die Spannung U1 10 Volt erreicht hat. Im Bereich 25 steigt demgemäß der Differenzwert d = U1 - U2 linear an. Es folgt der Bereich 26. Hier bleibt die Spannung U1 konstant auf 10 Volt, während die Spannung U2 noch linear ansteigt. Demgemäß nimmt der Differenzwert d entsprechend der Steigung von U2 im Bereich 26 linear ab. An den Bereich 26 schließt sich der Bereich 27 an. Hier springt die Spannung U1 von plus 10 Volt auf 0 Volt, während die Spannung U2 - ebenso wie in den Bereichen 25 und 26 - noch linear zunimmt. Insgesamt führt dieses dazu, daß der Differenzwert d ins Negative springt und dabei entsprechend der Zunahme der Spannung U2 in diesem Bereich linear negativ zunimmt bis der Bereich 28 erreicht ist. In diesem Bereich 28 beginnt die Spannung U1 von 0 Volt an wieder zu steigen, während die Spannung U2 ebenfalls noch linear zunimmt. Da die Spannung U1 in diesem Bereich relativ gesehen jedoch stärker ansteigt als die Spannung U2 (aufgrund der unterschiedlichen Neigungen von U1 und U2) verkleinert sich der Betrag des hier negativ gewordenen Differenzwertes d. Es folgt der Bereich 29, in dem die Spannung U2 ihren maximalen Wert 10 Volt konstant beibehält, während die Spannung U1 konstant ansteigt. Dieses führt dazu, daß sich der negative Differenzwert d mit einer Steigung verkleinert, die dem Anstieg der Spannung U1 entspricht. Im anschließenden Bereich 30 springt die Spannung U2 von plus 10 Volt auf 0 Volt zurück, während die Spannung U1 konstant ansteigt. Demzufolge wird der Differenzwert d wieder positiv und nimmt mit einer Steigung zu, die dem Anstieg der Spannung U1 entspricht. Dieses erfolgt solange, bis der Bereich 31 erreicht ist, wobei hier die Spannung U2 - von 0 Volt ausgehend - wieder konstant zunimmt, so daß hier ein Bereich 31 vorliegt, in dem sowohl die Spannung U1 als auch die Spannung U2 konstant zunehmen, so daß insgesamt - mit der sich aus den jeweiligen Steigungen der Einzelspannungen zusammensetzenden Steigung - der Differenzwert d zunimmt. Es folgt der Bereich 32; hier nimmt die Spannung U1 ihren konstanten Wert 10 Volt ein, während die Spannung U2 weiterhin kontinuierlich zunimmt. Demzufolge nimmt der Differenzwert d entsprechend der Steigung von U2 ab. Der anschließende Bereich 33 ist dadurch gekennzeichnet, daß die Spannung U1 von plus 10 Volt auf 0 Volt zurückspringt, während die Spannung U2 kontinuierlich zunimmt. Der Differenzwert d wird mithin negativ und nimmt mit einer Steigung zu, die der Steigung der Spannung U2 entspricht. Der anschließende Bereich 34 zeichnet sich dadurch aus, daß die Spannung U1 - von 0 Volt ausgehend - kontinuierlich zunimmt, jedoch kleiner ist als die ebenfalls kontinuierlich zunehmende Spannung U2. Mithin ist der Differenzwert d negativ und nimmt mit zunehmendem Drehwinkel geringfügig ab. In dem folgenden Bereich 35 behält die Spannung U2 den konstanten Wert plus 10 Volt bei, während die - im Werte - kleinere Spannung U1 kontinuierlich zunimmt. Für den negativen Differenzwert ergibt sich somit eine kontinuierliche Wertverkleinerung. Der anschließende Bereich 36 zeichnet sich dadurch aus, daß die Spannung U2 von plus 10 Volt auf 0 Volt springt, während die Spannung U1 kontinuierlich zunimmt. Demgemäß wird der Differenzwert d wieder positiv; er steigt mit der gleichen Steigung an, wie die Spannung U1. Es folgt der Bereich 37, in dem die Spannungen U1 und U2 beide kontinuierlich zunehmen, so daß auch der Differenzwert d mit einer entsprechenden Steigung zunimmt. Im nachfolgenden Bereich 38 bleibt die Spannung U1 konstant auf plus 10 Volt; die Spannung U2 steigt kontinuierlich an, so daß sich insgesamt eine Abnahme des Differenzwertes d ergibt. Im Bereich 39 springt die Spannung U1 von plus 10 Volt auf 0 Volt und die Spannung U2 nimmt kontinuierlich zu. Da nunmehr U1 kleiner als U2 ist, wird der Differenzwert d negativ. Im Bereich 40 steigt weiterhin die Spannung U2 konstant an; dieses gilt auch für die Spannung U1, die jedoch kleiner ist. Mithin bleibt der Differenzwert d negativ, jedoch konstant leicht abfallend. Der anschließende Bereich 41 zeichnet sich dadurch aus, daß die Spannung U2 konstant auf 10 Volt bleibt, während die Spannung U1 linear zunimmt; der negative Differenzwert nimmt daher ab. Der Bereich 42 zeigt nunmehr entsprechend, daß der Differenzwert d wieder positiv wird, wobei sein Anstieg der Steigung der Spannung U1 entspricht. Im Bereich 43 sind die Spannungen U1 und U2 beide linear steigend; entsprechend wächst der Differenzwert d. Bei den nachfolgenden Bereichen 44 bis 48 usw. wiederholt sich der bereits beschriebene Vorgang entsprechend. Insgesamt gesehen ist erkennbar, daß in den Bereichen 25 und 26 sowie 30 bis 32 und 36 bis 38 als auch 42 bis 44 usw. U1 größer U2 ist, während in den Bereichen 27 bis 29 bzw. 33 bis 35 und 39 bis 41 sowie 45 bis 47 usw. die Spannung U1 kleiner als U2 ist.

Hieraus ergibt sich, daß in Bezug auf die Kenntnis der Spannungswerte U1 und U2 eine eindeutige Aussage bezüglich des Drehwinkels des Stellgliedes des Verstellantriebes 1 möglich ist.

Zur Erleichterung der Drehwinkelbestimmung ist vorzugsweise der Rechner 20 heranzuziehen. Die Drehwinkelbestimmung (Position des Verstellantriebes) erfolgt vorzugsweise entsprechend dem Flußdiagramm der Fig. 5. Aus diesem ist ersichtlich, daß der Rechner über den AD-Wandler 19 die digitalisierten Werte der Spannungen U1 und U2 erhält. Ist U1 größer U2, so erfolgt die Prüfung, ob U2 0 Volt ist oder U1 10 Volt. Ist U2 0 Volt, so ergibt sich eine Steigung sp1 sowie eine Konstante kp1; ist U1 10 Volt, so folgt daraus eine Steigung sp2 sowie eine Konstante kp2. Ist U2 weder 0 Volt noch U1 10 Volt, so wird mittels des Rechners die Steigung sp3 sowie die Konstante kp3 ausgewählt. Sofern U1 nicht größer als U2 ist, wird geprüft, ob U1 0 Volt ist. Ist dieses der Fall, so beträgt die Steigung sn1 und die Konstante kn1. Ist U2 jedoch 10 Volt, so wird die Steigung sn2 und die Konstante kn2 gewählt. Ist U1 kleiner U2, wobei U1 jedoch nicht 0 Volt und U2 auch nicht 10 Volt ist, so wählt der Rechner die Steigung sn3 und die Konstante kn3 aus. Die genannten Steigungen und Konstanten sind tabellarisch in dem Speicher des Rechners hinterlegt. Mit den jeweils aufgefundenen Steigungen bzw. Konstanten kann nunmehr die Position des Verstellantriebes berechnet werden. Dieses erfolgt nach der Formel:

Position (Grad) = (U1 (Volt) - U2 (Volt)) x Steigung (Grad / Volt) + Konstante (Grad)

Die so ermittelte Ist-Position kann zur Anzeige gebracht werden. Im übrigen kann dann die zuvor beschriebene Regelung stattfinden, sofern die Ist-Position von der Sollposition abweicht. Anstelle der Regelung kann gegebenenfalls auch eine Steuerung vorgesehen sein.

Alternativ ist es jedoch auch möglich, daß der Rechner nicht die beschriebenen Steigungen und Konstanten tabellarisch gespeichert hat und zur Verfügung stellt, sondern daß entsprechende Funktionen, das heißt, Kurvenverläufe, im Rechner gespeichert sind, aus denen die einzelnen Komponenten zur Positionsbestimung entnehmbar sind.

Ein Vergleich der Fig. 5 und 7 zeigt, daß in den jeweiligen Bereichen Verhältnisse vorliegen, die eindeutig zu einer Bestimmung der entsprechenden Steigung und Konstanten führen. Die gemäß Formel hinzuzuaddierende Konstante ergibt sich rein mathematisch daraus, daß die Kurvenverläufe der Fig. 7 größtenteils nicht durch den Nullpunkt des Koordinatensystems laufen.

Im Zuge des Drehwinkelverlaufes der Fig. 6 ergeben sich zehnmal, nämlich alle 360°, einander ähnliche Verhältnisse. Es können sechs unterschiedliche Bereiche unterschieden werden:

1. Spannung Potentiometer 8 ist größer als die des Potentiometers 11:

1.1. Die Spannung U2 des Potentiometers 11 beträgt 0 Volt.
1.2. Die Spannung U1 des Potentiometers 8 befindet sich im linear ansteigenden Bereich.
1.3. Die Spannung U1 des Potentiometers 8 beträgt 10 Volt.

2. Die Spannung des Potentiometers 8 ist kleiner oder gleich groß wie die des Potentiometers 11:

2.1. Die Spannung U1 des Potentiometers 8 ist 0 Volt.
2.2. Die Spannung des Potentiometers 11 befindet sich im linear ansteigenden Bereich.
2.3. Die Spannung U2 des Potentiometers 11 ist 10 Volt.

Diese Einteilung in sechs unterschiedliche Bereiche ergibt eine eindeutige Zuordnung, wobei keinerlei Überschneidungen bzw. Doppeldeutigkeiten vorhanden sind.

Gemäß einer Weiterbildung der Erfindung sind nach Anfahren einer bestimmten Position auch noch Feinkorrekturen mit ungewöhnlich hoher Genauigkeit möglich. Hierbei wird wie folgt vorgegangen:

Zunächst wird eine Positionierung - wie vorstehend beschrieben - vorgenommen. Sobald die Sollposition erreicht ist, kann dann eine Feinkorrektur vorgenommen werden, indem auf ein Potentiometer, entweder das Potentiometer 8 oder das Potentiometer 11 umgeschaltet wird. Dieses bedeutet, daß nunmehr nur der Widerstandswert eines der Potentiometer betrachtet wird, wobei vorzugsweise das Potentiometer 8 oder 11 ausgewählt wird, das sich etwa in Mittelstellung seines linearen Bereiches befindet.

Gemäß vorstehender Angaben soll der Gesamthub 120mm betragen. Beispielsweise wird mittels der oben stehenden Positionierung der Wert 100mm angefahren. Um diese Position (100mm) soll nunmehr eine Feinkorrektur plus/minus 0,1mm stattfinden. Dieser Feinkorrekturweg von plus/minus 0,1mm entspricht einer bestimmten Spannungs- und damit Drehwinkeländerung des ausgewählten Potentiometers 8 bzw. 11. Dabei ändert sich die Spannung des ausgewählten Potentiometers entsprechend dem Feinkorrekturweg von plus/minus 0,1mm um eine entsprechende Spannungsdifferenz. Diese ist deutlich meßbar, was bei der zuvor beschriebenen Arbeitsweise mittels beider Potentiometer nicht der Fall ist, da diese kleine Feinkorrekturdifferenz eine Spannungsänderung des Differenzwertes d zur Folge haben würde, die so klein ist, daß sie im Störspannungsbereich liegt. Bei der Umschaltung auf nur ein Potentiometer läßt sich selbstverständlich nicht mehr der absolute Drehwinkelwert bestimmen, sondern es läßt sich um nur diesen zuvor bestimmten Drehwinkelwert herum ein relativer Feinkorrekturbereich abfahren.

Vorzugsweise werden mittels des AD-Wandlers 19 die Analogwerte (0 bis 10 Volt) in 4.096 Digitalwerte umgewandelt.

**Patentansprüche**

1. Vorrichtung zur Erfassung der Position eines Verstellantriebes (1),
    - wobei der Verstellantrieb (1) mit den Schleifern zweier Endlospotentiometer (8, 11) gekoppelt ist,
    - wobei die Schleifer der beiden Endlospotentiometer (8, 11) mit zueinander unterschiedlichen übersetzungsverhältnissen ($ü_1$, $ü_2$) angetrieben sind, wobei die Potentiometer (8, 11) am eine Konstantspannungsquelle (UB) angeschlossen sind und

- wobei ein Rechner (20) vorgesehen ist, der aus der Spannungsdifferenz d = $u_1$ - $u_2$ der beiden Potentiometer (8, 11) gemäß der Beziehung

Position [Grad] = d [Volt] * Steigung [Grad/Volt] + Konstante [Grad]

die Position des Verstellantriebs (1) ermittelt, wobei Steigung und Konstante jeweils vorgebene Werte sind, deren Größe davon abhängt, ob $u_1$ größer oder kleiner ist als $u_2$ und ob $u_1$ bzw. $u_2$ gleich Null oder gleich $u_{max}$ ist oder im Zwischenbereich von Null und $u_{max}$ liegt.

2. Vorrichtung, nach Anspruch 1, wobei die Endlos-Potentiometer (8, 11) als Eingang-Potentiometer ausgebildet sind.

3. Vorrichtung nach Anspruch 1 oder 2, wobei das übersetzungsverhältnis zwischen den beiden Endlos-Potentiometern (8, 11) lautet:

$$ü = \frac{n1}{n2} = \frac{x}{x-1}$$

wobei n1 die Umdrehungen des Schleifers des ersten Potentiometers (8) und n2 die Umdrehungen des Schleifers des zweiten Potentiometers (11) bezeichnen und x die maximale Gesamtumdrehungszahl des Verstellantriebes für den maximalen Verstellhub ist.

4. Vorrichtung nach einem der vorhergehenden Ansprüche, wobei das Antriebsverhältnis der beiden Potentiometer (8, 11) derart gewählt ist, daß - außer am Anfang und am Ende des Gesamterfassungsbereichs - die beiden Schleifer nicht gleichzeitig auf dem jeweiligen Anschlußbereich der Widerstandsanordnung des zugehörigen Potentiometers (8, 11) stehen.

5. Vorrichtung nach einem der vorhergehenden Ansprüche, wobei die Potentiometerwerte über Analog-Digital-Wandler (19) dem die Position auswertenden Rechner (20) zugeführt werden.

6. Vorrichtung nach Anspruch 1, **dadurch gekennzeichnet,** daß sie an einer Druckmaschine zur Erfassung der Position des Verstellantriebes (1) vorgesehen ist.

**Claims**

1. Apparatus for sensing the position of an adjusting drive (1),
   - the adjusting drive (1) being coupled to the sliders of two endless potentiometers (8, 11),
   - the sliders of the two endless potentiometers (8, 11) being driven with different transmission ratios ($ü_1$, $ü_2$), the potentiometers (8, 11) being connected to a constant-voltage source (UB) and
   - a computer (20) being provided, which determines the position of the adjusting drive (1) from the voltage difference d = $u_1$ - $u_2$ of the two potentiometers (8, 11) according to the relationship

   position [degrees] = d [volts] * slope [degrees/volts] + constant [degrees],

   slope and constant in each case being predetermined values, the magnitude of which depends on whether $u_1$ is greater than or less than $u_2$ and whether $u_1$ or $u_2$ is equal to zero or equal to $u_{max}$ or lies in the intermediate range of zero and $u_{max}$.

2. Apparatus according to Claim 1, the endless potentiometers (8, 11) being designed as input potentiometers.

3. Apparatus according to Claim 1 or 2, the transmission ratio between the two endless potentiometers (8, 11) being described as:

$$ü = \frac{n1}{n2} = \frac{x}{x-1}$$

where n1 denotes the revolutions of the slider of the first potentiometer (8) and n2 denotes the revolutions of the slider of the second potentiometer (11) and x is the maximum total number of revolutions of the adjusting drive for the maximum adjusting stroke.

4. Apparatus according to one of the preceding claims, the drive ratio of the two potentiometers (8, 11) being chosen such that - apart from at the beginning and at the end of the overall sensing range - the two sliders are not simultaneously situated on the respective terminal area of the resistance arrangement of the associated potentiometer (8, 11).

5. Apparatus according to one of the preceding claims, the potentiometer values being fed via analogdigital converters (19) to the computer (20) evaluating the position.

6. Apparatus according to Claim 1, characterised in that it is provided on a printing machine for sensing the position of the adjusting drive (1).

**Revendications**

1. Dispositif pour détecter la position d'un dispositif d'entraînement de réglage (1), dans lequel
   - le dispositif d'entraînement de réglage (1) est couplé aux curseurs de potentiomètres sans fin (8,11),
   - les curseurs des deux potentiomètres sans fin (8,11) sont entraînés avec des rapports de transmission différents ($\ddot{u}_1$, $\ddot{u}_2$), les potentiomètres (8,11) étant raccordés à une source de tension constante (UB),
   - il est prévu un calculateur (20) qui, à partir de la différence de tension $d = u_1 - u_2$ des deux potentiomètres (8,11), détermine conformément à la relation

     position [degrés] = d [volts] * pente [degrés/volt] + constante [degrés]

     la position du dispositif d'entraînement de réglage (1), la pente et la constante étant des valeurs respectivement prédéterminées, dont l'amplitude dépend du fait que $u_1$ est supérieure ou inférieure à $u_2$ et du fait que $u_1$ ou $u_2$ est nulle ou égale à $u_{max}$ ou se situe dans la plage intermédiaire entre zéro et $u_{max}$.

2. Dispositif selon la revendication 1, dans lequel les potentiomètres sans fin (8,11) sont réalisés sous la forme de potentiomètres d'entrée.

3. Dispositif selon la revendication 1 ou 2, dans lequel le rapport de transmission entre les deux potentiomètres sans fin (8,11) est :

$$\ddot{u} = \frac{n1}{n1} = \frac{x}{x-1}$$

n1 représentant le nombre de rotations du curseur du premier potentiomètre (8) et n2 le nombre de rotation du curseur du second potentiomètre (11) et x le nombre maximum total des rotations du dispositif d'entraînement de réglage pour la course de réglage maximale.

4. Dispositif selon l'une des revendications précédentes, dans lequel le rapport d'entraînement des deux potentiomètres (8,11) est choisi de manière que - en dehors du début et de la fin de la gamme totale de détection - les deux curseurs ne se trouvent pas simultanément dans la zone respective de raccordement du dispositif à résistance du potentiomètre associé (8,11).

5. Dispositif selon l'une des revendications précédentes, dans lequel les valeurs des potentiomètres sont envoyées par l'intermédiaire de convertisseurs analogique/numérique (19) au calculateur (20) qui évalue la position.

6. Dispositif selon la revendication 1, caractérisé en ce qu'il est prévu sur une machine d'impression pour détecter la position du dispositif d'entraînement de réglage (1).

FIG.1

FIG.2

$U_B = + 10\ V$

d

u1

u2

0 V

FIG.3

FIG.4

Wandlung Analogwert
Potentiometer 8 (u1)

Wandlung Analogwert
Potentiometer 11 (u2)

Ist u1 > u2 ? ⊣ja

nein

u2 = 0 Volt ⊣ ja — Steigung = sp1
Konstante= kp1(u2)

nein

u1 = 10 Volt ⊣ ja — Steigung = sp2
Konstante = kp2(u1)

nein

Steigung = sp3
Konstante = kp3 (u1)

u1 = 0 Volt ⊣ ja — Steigung = sn1
Konstante = kn1(u1)

nein

u2 = 10 Volt ⊣ ja — Steigung = sn2
Konstante = kn2 (u2)

nein

Steigung = sn3
Konstante = kn3 (u2)

Position $(Grad) = (u1_{(Volt)} - u2_{(Volt)})$ * Steigung $(\frac{Grad}{Volt})$ +Konstante(Grad)

Plausibilitätsprüfung

Anzeige der Istposition

Regelung / Steuerung Motor

Fig. 5

FIG. 6

FIG. 7

EP 0 386 334 B1

14